# EUROPÄISCHE PATENTSCHRIFT

(11) **EP 3 775 576 B1**
(45) Veröffentlichungstag und Bekanntmachung des Hinweises auf die Patenterteilung: **20.07.2022**
(21) Anmeldenummer: 19723759.7
(22) Anmeldetag: 09.05.2019
(51) Int. Cl.: F15B 13/04, F15B 13/044

(54) **STEUERVORRICHTUNG**
CONTROL DEVICE
DISPOSITIF DE COMMANDE

(30) Priorität: 18.05.2018 DE 102018207927; 18.05.2018 DE 102018207929; 18.05.2018 DE 102018207928
(43) Veröffentlichungstag der Anmeldung: 17.02.2021
(73) Patentinhaber: HYDAC Systems & Services GmbH, 66280 Sulzbach (DE)
(72) Erfinder: BIWERSI, Sascha Alexander, 66693 Mettlach (DE)
(74) Vertreter: Bartels und Partner, Patentanwälte
(86) Internationale Anmeldenummer: PCT/EP2019/061895
(87) Internationale Veröffentlichungsnummer: WO 2019/219489

(56) Entgegenhaltungen:
- WO-A1-2017/092855
- WO-A1-2018/059727
- DE-A1-102007 031 429

## Beschreibung

Die Erfindung betrifft eine Steuervorrichtung für einen schwingungsanfälligen hydraulischen Verbraucher mit den Merkmalen im Oberbegriff von Anspruch 1.

Derartige Steuervorrichtungen werden in der Praxis häufig zur Ansteuerung von Drehwerken eingesetzt, beispielsweise von Kränen oder Baggern. Diese Drehwerke weisen oftmals einen Hydromotor auf, der in zwei gegenläufigen Drehrichtungen antreibbar ist, um den Aufbau des Krans oder Baggers in eine gewünschte Richtung oder Position zu drehen.

Die bekannten Steuervorrichtungen weisen ein nachteiliges Verhalten auf. Öffnet oder schließt man bei diesen Steuervorrichtungen den Steuerschieber sprunghaft, so wird in Verbindung mit der Druckwaage ein Regelverhalten erzeugt, das regelungstechnisch einem PT-2-Glied entspricht. Das bedeutet, dass Schwingungen im Volumenstrom der Hydraulikflüssigkeit erzeugt werden, die anschließend durch die Steuervorrichtung gedämpft werden. Diese Schwingungen werden an den Verbraucher weitergeleitet, so dass sich Drehschwingungen bilden, die dazu führen können, dass sich der Verbraucher schlecht regeln lässt. Unter Umständen kann es auch zu Schäden am Verbraucher kommen.

Die WO 2017/092855 A1 beschreibt eine Steuervorrichtung für einen schwingungsanfälligen hydraulischen Verbraucher umfassend ein Ventil mit einem mittels einer Betätigungseinrichtung ansteuerbaren Steuerschieber, wobei das Ventil einen Druckversorgungsanschluss aufweist, an den eine Druckwaage anschließbar ist, die von einer Druckversorgungseinrichtung mit Druckfluid versorgbar ist, wobei die Betätigungseinrichtung einen Motor aufweist und wobei mittels einer Steuereinrichtung am Steuerschieber eine lastdruckabhängige Kraft erzeugbar ist.

Weitere Steuervorrichtungen gehen aus der DE 10 2007 031 429 A1 und der WO 2018/059727 A1 hervor.

Der Erfindung liegt daher die Aufgabe zugrunde, eine verbesserte Steuervorrichtung aufzuzeigen, die ein stark oder maximal reduziertes PT-2-Verhalten aufweist.

Diese Aufgabe wird durch eine Steuervorrichtung mit den Merkmalen von Anspruch 1 gelöst.

Gemäß dem Kennzeichen von Anspruch 1 ist vorgesehen, dass die lastdruckabhängige Kraft am Steuerschieber auf eine elektrische Motorsteuerung des Gleichstrommotors einwirkt, welche eine Änderung der Kraft erkennt und dieser Änderung der Kraft entgegenwirkend einer Dämpfung der Schwingungen des Verbrauchers dient.

Bei der erfindungsgemäßen Lösung wird durch den Lastdruck eine Kraft auf den Steuerschieber ausgeübt, welche an den Motor übertragen wird, der diese Kraft auswertet und dann den Steuerschieber unter Berücksichtigung dieser Kraft bewegt. Die Erfassung des Lastdrucks erfolgt dabei so unmittelbar, dass auftretende Schwingungen durch den Motor und die Ansteuerung des Steuerschiebers effektiv gedämpft oder gar ausgeglichen werden. Mit der erfindungsgemäßen Steuervorrichtung können mehrere Drucksensoren, die den Lastdruck im Vorlauf und im Rücklauf erfassen, eingespart werden. Darüber hinaus ist die Lösung besonders verschleißarm, weist deshalb eine besonders lange Lebensdauer auf und ist kostengünstig, weil keine zusätzlichen Bauteile verbaut und gewartet werden müssen.

In einer vorteilhaften Ausführungsform ist der Motorsteuerung ein Drehwinkelsensor zugeordnet, der bevorzugt einen gehäusefesten Hall-Sensor und einen an einer Motorwelle des Gleichstrommotors befestigten, drehbaren Magneten umfasst. Eine Verdrehung der Motorwelle, die proportional zur Verschiebung des Steuerschiebers ist, kann somit ausgewertet und an eine Motorsteuerung weitergeleitet werden, die dann den Motor entsprechend ansteuert.

In einer vorteilhaften Ausführungsform weist die Steuervorrichtung einen Gleichstrommotor in Form eines bürstenlosen Gleichstrommotors (engl. EC-Motor) mit einer sensorlosen Kommutierung auf, die eine Erfassung einer, der am Steuerschieber wirkenden lastdruckabhängigen Kraft entsprechenden Rotorposition des Gleichstrommotors mittels einer in den Spulen eines Stators ausgelösten Gegenspannung ermöglicht, die von der Motorsteuerung auswertbar ist. Durch die sensorlose Kommutierung werden die Druckkräfte am Steuerschieber effektiv an den Gleichstrommotor übertragen und sind dort zur Bestimmung der Rotorposition auf einfache Weise auswertbar.

Der Gleichstrommotor kann unterhalb einer vorgebbaren Mindestdrehzahl, insbesondere im Stillstand, mittels der Motorsteuerung Stromimpulse an seinen Spulen erfahren, die den Gleichstrommotor im Stillstand belassen, aber dennoch das magnetische Feld des Rotors beeinflussen, wodurch der Stromfluss durch die Spulen infolge der Änderung der lastdruckabhängigen Kraft derart veränderbar ist, dass eine Bestimmung der Rotorposition möglich ist, die eine Korrektur der Lage des Steuerschiebers im Endeffekt ermöglicht. Besonders vorteilhaft ist hierbei, dass die aufgezeigte Lösung auch bei besonders geringen Drehzahlen des Rotors eine zuverlässige Bestimmung der Rotorposition ermöglicht.

Bevorzugt bewegt der Gleichstrommotor den in einem Ventilgehäuse des Ventils längsverschiebbar geführten Steuerschieber über ein Zahnradgetriebe. Durch das Zahnradgetriebe gibt es eine direkte proportionale Beziehung zwischen der axialen Position des Steuerschiebers und dem Drehwinkel des Rotors. Diese Beziehung wird sowohl zum Erfassen der lastdruckabhängigen Kraft als auch zur Positionierung des Steuerschiebers eingesetzt.

Der hydraulische Verbraucher kann ein Hydromotor mit zwei gegenläufigen Drehrichtungen sein.

Die Druckversorgungseinrichtung ist vorteilhaft eine LS-druckgeregelte Schwenkwinkelpumpe, die durch das Ventil ansteuerbar ist. Auf diese Weise kann die Leistung der Druckversorgungseinrichtung an den jeweiligen Bedarf des Verbrauchers angepasst werden.

Das Ventilgehäuse kann einen Druckversorgungsanschluss, mindestens zwei Nutzanschlüsse, die wechselweise einem Lastdruck oder einem Rücklaufdruck ausgesetzt sind, und einen Rücklaufanschluss aufweisen.

Besonders vorteilhaft sperrt der Steuerschieber in seiner Neutral- oder Mittelstellung im Ventilgehäuse als Teil der Steuereinrichtung zwei Signalleitungen ab, die in Verfahrstellungen des Steuerschiebers außerhalb der Neutral- oder Mittelstellung den Lastdruck auf eine erste Steuerseite und den Rücklaufdruck auf eine gegenüberliegende zweite Steuerseite des Steuerschiebers weiterleiten. Auf diese Weise ist sichergestellt, dass in der Neutralstellung der Steuerschieber durch die an den Nutzanschlüssen anstehenden Drücke nicht verschoben werden kann, während bei jeder aus der Neutralstellung ausgelenkten Position des Steuerschiebers zuverlässig eine Meldung des Lastdrucks auf die Steuerseiten des Steuerschiebers und damit an die Motorsteuerung des Gleichstrommotors erfolgt. Da der Druck am Druckversorgungsanschluss stets nur minimal höher als der Lastdruck am beaufschlagten Nutzanschluss ist, kann der Steuerschieber auf einer seiner Steuerseiten auch vereinfachend mit dem Druck am Druckversorgungsanschluss repräsentativ für den Lastdruck beaufschlagt werden.

In die beiden Signalleitungen kann jeweils eine Blende geschaltet sein. Die Blende bewirkt, dass einerseits der Druck zuverlässig auf die Steuerseiten gemeldet wird und andererseits einer übermäßigen Leckage vorgebeugt wird. Eine weitere Funktion der Blenden ist, zur Dämpfung der Bewegungen des Steuerschiebers beizutragen.

Die beiden Steuerseiten des Steuerschiebers sind vorteilhaft in Steuerräumen des Ventilgehäuses geführt, die jeweils über eine Rücklaufblende an einen Tank oder sonstigen Rücklauf angeschlossen sind. Durch den Anschluss der Steuerräume an den Tank ist eine Druckentlastung möglich, die es erleichtert, den Steuerschieber im Ventilgehäuse zu bewegen.

Die Erfindung ist nachfolgend anhand von einem in den Zeichnungen dargestellten Ausführungsbeispiel näher erläutert. Es zeigen:
- Fig. 1: in einer schematischen Darstellung einen Schaltplan eines hydraulischen Systems des Standes der Technik mit einem Ventil;
- Fig. 2: einen Längsschnitt durch ein erfindungsgemäßes Ventil, das in einer Neutralstellung gezeigt ist;
- Fig. 3: ein Längsschnitt durch das Ventil der Fig. 2, bei dem der Steuerschieber in eine Endlage verschoben ist;
- Fig. 4: das Ventil der Fig. 3, wobei der Steuerschieber in einer Schnittdarstellung gezeigt ist;
- Fig. 5: eine Vergrößerung des Details X in Fig. 4; und
- Fig. 6: eine Vergrößerung des Details Y in Fig. 4.

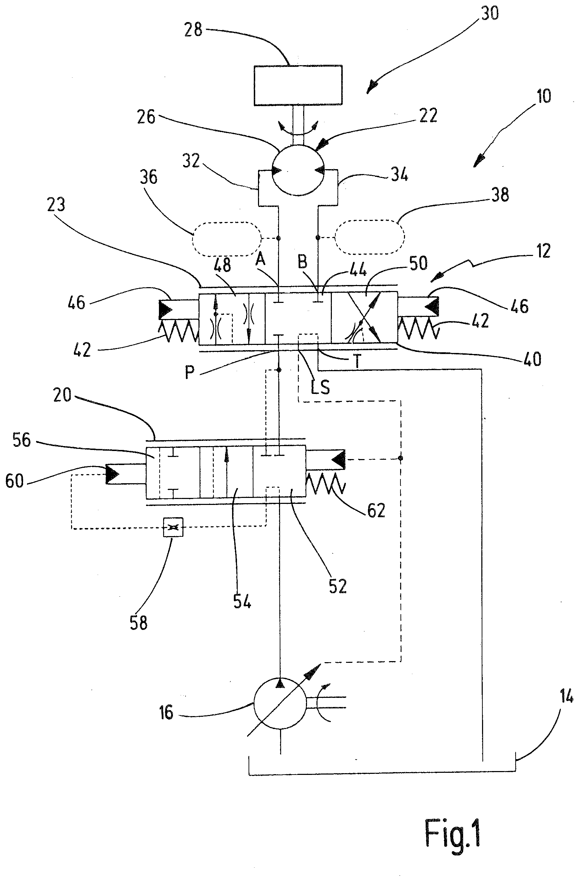

In der Fig. 1 ist ein hydraulisches System 10 des Standes der Technik mit einer Steuervorrichtung 12 schematisch dargestellt. Aus einem Tank 14 saugt eine Druckversorgungseinrichtung 16 in Form einer Pumpe ein Druckfluid, insbesondere eine Hydraulikflüssigkeit, an und fördert dieses zu einer Druckwaage 20. Abhängig vom Lastdruck eines Verbrauchers 22 regelt die Druckwaage 20 die Druckversorgung eines nachgeschalteten Ventils 23 der Steuervorrichtung 12. Durch das Ventil 23 wird der Verbraucher 22, bestehend aus einem Hydromotor 26 und einer Masse 28 angetrieben. Der Hydromotor 26 ist Teil eines Drehwerks 30, das in zwei gegenläufige Drehrichtungen antreibbar ist, um die Masse 28 in gewünschte Drehpositionen zu bewegen oder mit einer gewünschten Drehgeschwindigkeit anzutreiben. An Verbindungsleitungen 32, 34 zwischen dem Ventil 23 und dem Hydromotor 26 können Kapazitäten 36, 38, insbesondere in Form von Hydrospeichern, angeschlossen sein.

Das Ventil 23 ist ein 4/3-Wegeventil. Dessen Steuerschieber 40 ist durch eine Federanordnung 42 in eine Neutral- oder Mittelstellung 44 zentriert und durch eine Betätigungseinrichtung 46 zwischen seinen Schaltstellungen 44, 48, 50 bewegbar. Das Ventil 23 weist neben einem Druckversorgungsanschluss P, den Nutzanschlüssen A, B und dem Tankanschluss T auch noch einen Abgriff für den Lastdruck LS auf, um diesen an die Druckwaage 20 und an die Druckversorgungseinrichtung 16 weiterzumelden.

Dem Ventil 23 vorgeschaltet ist die Druckwaage 20. Diese weist drei Schaltstellungen 52, 54, 56 auf. In einer in der Bildebene rechten Schaltstellung 52 ist die Verbindung von der Druckversorgungseinrichtung 16 zum Ventil 23 unterbrochen. Der Pumpendruck wird über eine Druckwaagenblende 58 auf eine Steuerseite 60 der Druckwaage 23 gemeldet und wirkt einer Rückstellfeder 62 und gegebenenfalls einem vom Ventil 23 gemeldeten Lastdruck entgegen. In der Mittelstellung 54 der Druckwaage 20 wird das Ventil 23 mit der Druckversorgungseinrichtung 16 verbunden und es wird ein am Druckversorgungsanschluss P des Ventils 23 anstehender Druck über die Druckwaagenblende 58 auf die linke Steuerseite 60 der Druckwaage 20 gemeldet. In einer linken Schaltstellung 56 ist die Fluidverbindung zwischen der Druckversorgungseinrichtung 16 und dem Ventil 23 erneut unterbrochen, wobei aber weiterhin der am Druckversorgungsanschluss P des Ventils 23 anstehende Druck auf die linke Steuerseite 60 der Druckwaage 20 gemeldet wird.

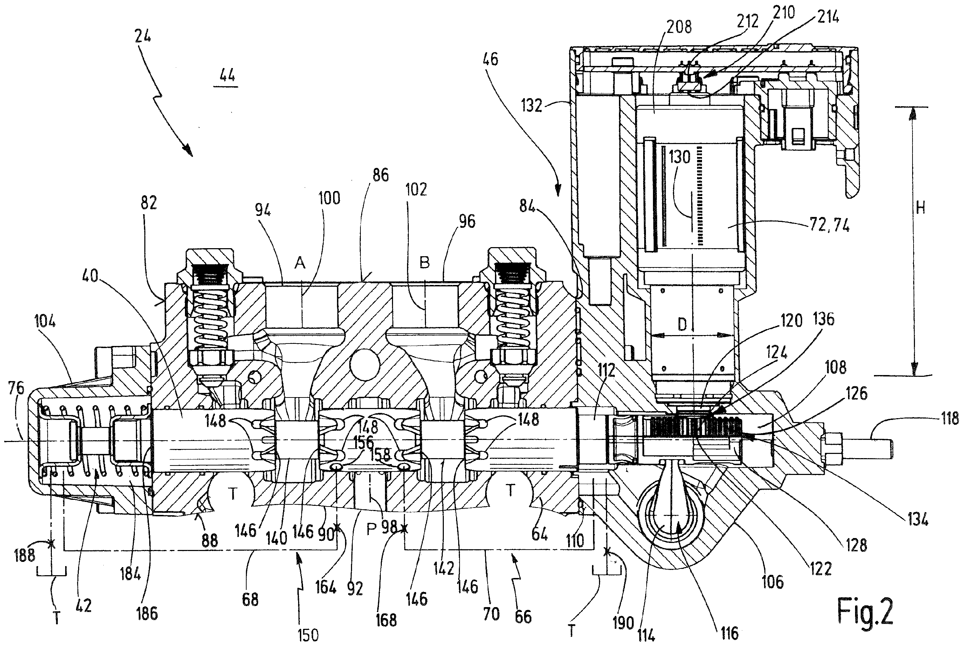

Unter Bezug auf die Fig. 2 wird nun das erfindungsgemäße Ventil 24 erläutert, das das Ventil 23 des Standes der Technik ersetzt. Das Ventil 24 ist ein LS-Wegeventil in Form eines Schieberventils. Die Bauweise des Ventilgehäuses 64 mit dem zugehörigen Steuerschieber 40 entspricht bei dem in den Figuren gezeigten Ausführungsbeispiel weitestgehend der aus der DE 10 2013 021 317A1 bekannten Ventilvorrichtung, auf die Bezug genommen wird. Der Unterschied der Erfindung besteht darin, dass der Steuerschieber 40 mit einer Steuereinrichtung 66 mit speziellen Signalleitungen 68, 70 und ein elektromotorischer Aktuator 72 in Form eines bürstenlosen Gleichstrommotors 74 vorgesehen sind, dessen Bauweise einen besonders vorteilhaften Einsatz der erfindungsgemäßen Vorrichtung 12 bei Serienanwendungen von Ventilblöcken mit eng nebeneinanderliegenden Ventilvorrichtungen ermöglicht. Sofern in dieser Anmeldung die Begriffe "Oberseite" und "Unterseite" verwendet werden, beziehen sich diese Angaben auf eine normale Einbaulage, wie sie in den Figuren dargestellt ist.

In Entsprechung zu der in der DE 10 2013 021 317 A1 offenbarten Lösung ist der Steuerschieber 40 in dem Ventilgehäuse 64 entlang einer Achse 76 verfahrbar. Das Ventilgehäuse 64 weist paarweise einander gegenüberliegende, nicht dargestellte Längsseiten und Stirnseiten 82, 84 auf. Ferner verfügt das Ventilgehäuse 64 über eine Oberseite 86 und eine Unterseite 88. Gemäß der Darstellung nach der Fig. 2 sind die dahingehenden Gehäusewandungen 90 gebrochen dargestellt. Es versteht sich, dass die dahingehenden Seiten 82-88 in Ebenen planparallel verlaufend in alle Richtungen vorstehen können. Am Ventilgehäuse 64 befinden sich weiter, wie bei derartigen Ventilvorrichtungen üblich, Gehäuseanschlüsse, wie ein Druckversorgungsanschluss P, zwei Nutzanschlüsse A, B, ein Rücklaufanschluss und ein Lastdruckanschluss. Die regelmäßig in Form von Bohrungen im Ventilgehäuse 92, 94, 96 eingebrachten Anschlüsse P, A, B weisen strichliniert wiedergegebene Längsachsen 98, 100, 102 auf.

Die im linken Gehäuseendbereich 104 befindliche Federanordnung 42 gibt für den Steuerschieber 40 in einer bei derartigen Ventilen üblichen Weise eine Neutral- oder Mittelstellung 44 vor, die in Fig. 2 dargestellt ist. An dem dem linken Gehäusebereich 104 entgegengesetzten, in der Fig. 2 rechtsseitig gelegenen Ende schließt sich an das Ventilgehäuse 64 ein Gehäuseendteil 106 an, das eine sich zur Achse 76 koaxial erstreckende innere Kammer 108 enthält, die gegenüber dem Ventilgehäuse 64 über eine Dichtung 110 abgedichtet ist, jedoch als Bestandteil des Ventilgehäuses 64 anzusehen ist. In Entsprechung zu der aus der DE 10 2013 021 317 A1 bekannten Ventilvorrichtung erstreckt sich der Steuerschieber 40 mit einem Endabschnitt 112 in die Kammer 108 und wirkt innerhalb der Kammer 108 mit einem Betätigungsteil 114 einer Notbetätigung 116 sowie einer Hublängenbegrenzung 118 des Steuerschiebers 40 zusammen. Da letztere ebenfalls der aus dem Dokument bekannten Lösung mit Stellschrauben entspricht, erübrigt sich diesbezüglich eine nähere Beschreibung.

Der als Aktuator 72 dienende bürstenlose Gleichstrommotor 74 ist am Gehäuseendteil 106 derart angeordnet, dass seine Motorwelle 120 die Verfahrachse 76 des Steuerschiebers 40 senkrecht schneidet, wobei sich ein am Ende 122 der Motorwelle 120 befindliches Zahnritzel 124 innerhalb der Kammer 108 befindet. Am Endabschnitt 112 des Steuerschiebers 40 ist eine Zahnstange 126 befestigt, die mit dem Zahnritzel 124 kämmt. Alternativ könnte auch ein mehrstufiges, insbesondere zweistufiges, Planetenradgetriebe oder ein exzentrisches Stirnradgetriebe vorgesehen sein. Die geringe oder nicht vorhandene Selbsthemmung des Antriebs ermöglicht auch die vorteilhaft einfache Bauweise der Nothandbetätigung 116. Wie bei der erwähnten bekannten Lösung ist der Steuerschieber 40 in der Kammer 108 drehfest geführt, sodass die Zahnstange 126 bei durch das Zahnritzel 124 bewirkten Axialbewegungen stets in Anlage mit einem führenden Gleitelement 128 ist. Anstelle des gezeigten Gleitelements 128 könnte auch ein Wälzlager oder eine Rolle vorgesehen sein.

Beim gezeigten Ausführungsbeispiel ist der Elektromotor in Form eines bürstenlosen Gleichstrommotors 74 vorgesehen. Bei einem Abmessungsverhältnis von Durchmesser D zu Höhe H von wesentlich weniger als 1,5, vorzugsweise von weniger als 1, stellt ein derartiger Motor 74 eine schnelle und sichere Ventilbetätigung ermöglichendes Drehmoment zur Verfügung und ermöglicht mit seiner schlanken Bauweise eine enge Nebeneinanderanordnung des Ventils 24 in Ventilblöcken.

Wie die Fig. 2 weiter zeigt, durchgreift eine Antriebsachse 130, respektive ein Motorgehäuse 132, die fiktive Verlängerung der Oberseite 86 des Ventilgehäuses 64. Ferner ist die Antriebsachse 130 des Elektromotors 74 parallel zu den Längsachsen 98-102 der Fluidanschlüsse P, A, B ausgerichtet.

Die nach außen hin abgedichtete innere Kammer 108 steht vom Ventilgehäuse 64 her unter Öl, sodass die durch das Zahnritzel 122, die Zahnstange 126 und ein nicht näher dargestelltes Gleitelement gebildete Getriebeanordnung 134 unter Öl läuft. Dabei ist die Abdichtung gegenüber dem Motorgehäuse 132 des Elektromotors 74 durch eine an der Motorwelle 120 vorgesehene Rotationsdichtung 136 gebildet.

Für den Durchmesser des runden Motorgehäuses 132 in Richtung der Nebeneinanderanordnung in einem Ventilblock steht die gesamte Breite der Ventilvorrichtung 12 zur Verfügung. Bei entsprechend geringem Durchmesser des Gleichstrommotors 74 und des Motorgehäuses 132 wäre auch eine seitliche Versetzung der Motorwelle 120 zur Verfahrachse 76 des Steuerschiebers möglich, so dass die Motorwelle 120 senkrecht auf der Verfahrachse 74 steht, wobei die Motorwelle 120 die die Verfahrachse 76 enthaltende Ebene nach wie vor senkrecht schneidet.

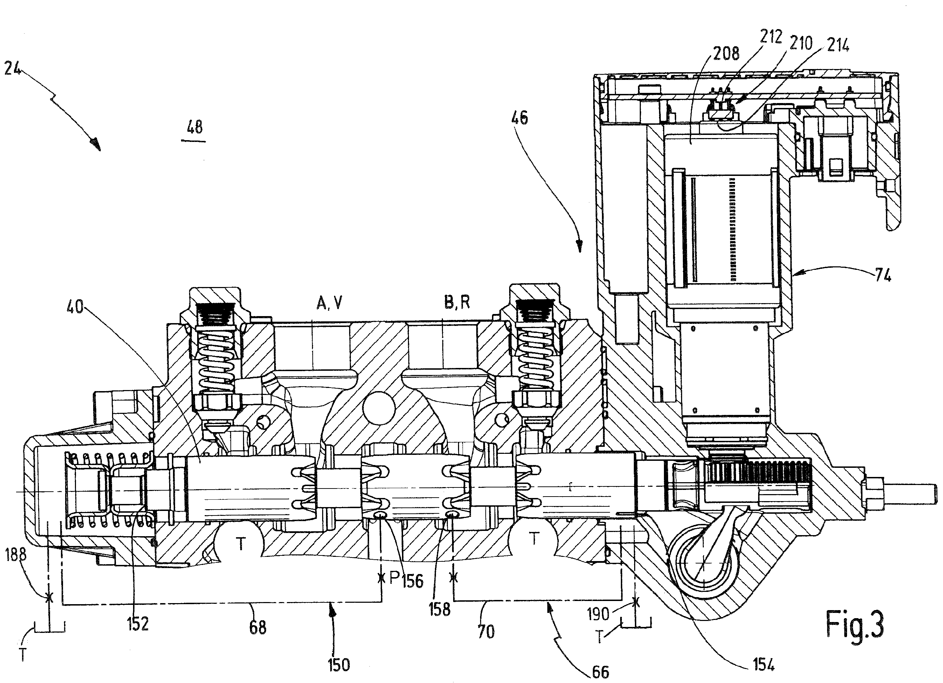

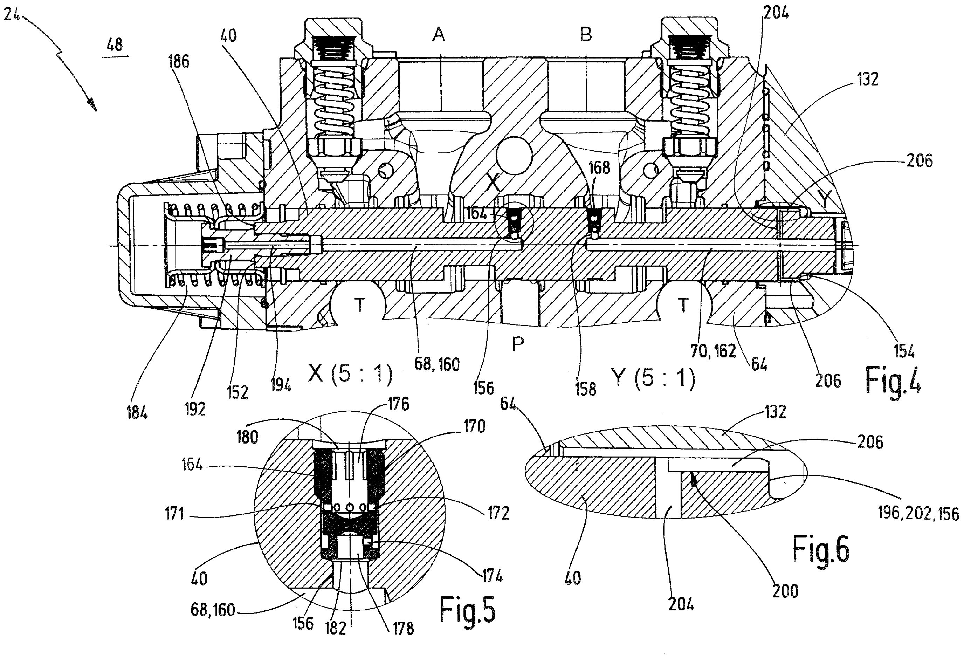

Der Steuerschieber 40 ist in den Bereichen der Nutzanschlüsse A und B mit Ringausnehmungen 140, 142 versehen. Diese Ringausnehmungen 140, 142 sind durch Öffnungskanten 146 begrenzt, welche Steuernuten 148 aufweisen. Zusätzlich ist eine Druckteilerschaltung 150 vorgesehen. Durch die Druckteilerschaltung 150 werden die an den Nutzanschlüssen A, B anstehenden Drücke, d.h. der Druck des Vorlaufs V und der Druck des Rücklaufs R, auf gegenüberliegende Steuerseiten 152, 154 des Steuerschiebers 40 abgebildet, wenn sich der Steuerschieber 40 außerhalb seiner Neutralstellung 44 befindet, vgl. Fig. 3 und 4. Hierzu sind im Steuerschieber 40 die zwei voneinander getrennten Signalleitungen 68, 70 vorgesehen. Jede Signalleitung 68, 70 verbindet einen Nutzanschluss A, B mit einer benachbarten Steuerseite 152, 154. Dazu ist für jede Signalleitung 68, 70 eine radiale Bohrung 156, 158 zwischen den Ringausnehmungen 140, 142 der Nutzanschlüsse A, B vorgesehen, die so positioniert ist, dass sie durch das Ventilgehäuse 64 abgedeckt ist, wenn sich der Steuerschieber 40 in einer Neutral-oder Mittelstellung 44 befindet, vgl. Fig. 2. Wenn sich der Steuerschieber 40 außerhalb dieser Neutralstellung 44 befindet, wird eine der radialen Bohrungen 156 mit dem den Lastdruck führenden Nutzanschluss A über den Druckversorgungsanschluss P und die andere Bohrung 158 mit dem den Rücklaufdruck führenden Nutzanschluss B verbunden, vgl. Fig. 3 und 4. Jede radiale Bohrung 156, 158 mündet über eine axiale Bohrung 160, 162 im Steuerschieber 40 in eine Steuerkammer an einer Steuerseite 152, 154 des Steuerschiebers 40 aus.

Wie sich weiter aus den Fig. 2, 4 und 5 ergibt, sind im Steuerschieber 40 zwei Blenden 164, 168 in den Signalleitungen 68, 70 vorgesehen. Die Blenden 164, 168 sind identisch und jeweils aus einem Einschraubteil 170 gebildet, das in eine der radialen Bohrungen 156, 158 von außen her eingeschraubt ist. Dergestalt kann über die jeweilige Blende 164, 168 eine Fluidverbindung zwischen dem zugeordneten Nutzanschluss A, B und den Steuerseiten 152, 154 des Steuerschiebers 40 hergestellt werden. Das jeweilige Einschraubteil 170 bildet mit der Wand 171 des Steuerschiebers 40 einen Fluidweg zwischen mindestens zwei übereinander angeordneten drosselnden Querbohrungen 172, 174 im Einschraubteil 170 aus. Die jeweilige Querbohrung 172, 174 im Einschraubteil 170 steht jeweils mit einer Längsbohrung 176, 178 im Einschraubteil 170 in Verbindung, die mit ihren einander abgewandten Enden 180, 182 zum einen in den Steuerkanal 68, 160; 70, 162 im Steuerschieber 40 und zum anderen in Abhängigkeit der jeweiligen Verfahrstellung dieses Steuerschiebers in den Druckversorgungsanschluss P oder einen der Nutzanschlüsse A, B münden.

Die Steuerkammern 184, 108 an den Enden 186, 112 des Steuerschiebers 40 sind jeweils über Rücklaufblenden 188, 190 mit einem Tank verbunden.

In den Fig. 3 und 4 ist das erfindungsgemäße Ventil 24 mit einem in seine rechte Endstellung 48 verschobenen Steuerschieber 40 gezeigt. In dieser Position ist der Druckversorgungsanschluss P mit dem Nutzanschluss A verbunden. Dementsprechend wird über die im Steuerschieber 40 vorgesehene Signalleitung 68 der Druck am Druckversorgungsanschluss P auf die linke Steuerseite 152 des Steuerschiebers 40 weitergemeldet. Wie insbesondere die Fig. 4 zeigt, ist in die axiale Bohrung 160 der Signalleitung 68 eine Schraube 192 der Federanordnung 42 eingeschraubt. Die Schraube 192 weist ebenfalls eine axiale Bohrung 194 auf, um die axiale Bohrung 160 im Steuerschieber 40 mit der zugeordneten Steuerseite 152 zu verbinden.

An seinem rechten Ende 122 weist der Steuerschieber 40 einen Absatz 196 auf. Damit die Steuerseiten 152, 154 an beiden Enden 186, 112 des Steuerschiebers 40 die gleiche Fläche aufweisen, um sicherzustellen, dass das Regelverhalten der Steuervorrichtung 12 in beiden Betätigungsrichtungen gleich ist, ist eine Fluidverbindung 200 von der Signalleitung 70 zum ringförmigen Teil 202 der Steuerseite 156 hergestellt. Diese ist in Fig. 4 und 6 dargestellt. Die Fluidverbindung 200 umfasst eine Querbohrung 204 des Steuerschiebers 40 und mindestens eine, dargestellt sind zwei, axiale Nut 206 des Steuerschiebers 40.

Die Funktionsweise der erfindungsgemäßen Steuervorrichtung 12 wird nachfolgend erläutert.

Wenn sich der Steuerschieber 40 in der Neutral- oder Mittelstellung 44 befindet, sind die Signalleitungen 68, 70 von den Nutzanschlüssen A, B durch das Ventilgehäuse 64 getrennt, vgl. Fig. 2. Die Drücke im Vorlauf V und im Rücklauf R werden deshalb in dieser Stellung 44 nicht auf die Steuerseiten 152, 154 des Steuerschiebers 40 abgebildet. Stattdessen sind die Steuerseiten 152, 154 des Steuerschiebers 40 über die Rücklaufblenden 188, 190 zum Tank T hin druckentlastet. Der Gleichstrommotor 74 erhält in dieser Stellung keine Meldung über den Lastdruck und steuert daher den Steuerschieber 40 lastdruckunabhängig an.

Wenn sich der Steuerschieber 40 außerhalb der Neutralstellung 44 befindet, sind Verbindungen von den Nutzanschlüssen A, B zu den Steuerseiten 152, 154 über die Signalleitungen 68, 70 hergestellt, vgl. Fig. 3 und 4. In diesen Fällen wirkt der Druck an den Nutzanschlüssen A, B auf die Steuerseiten 152, 154, wobei der Druck im Vorlauf V auf den Steuerschieber 40 so einwirkt, dass er den Steuerschieber 40 in eine die Verbindung vom Druckversorgungsanschluss P zum zugeordneten Nutzanschluss A; B maximal öffnende Richtung zu bewegen sucht. Im Fall der Fig. 3 und 4 wird der Steuerschieber 40 vom Gleichstrommotor 74 nach rechts bewegt. Der Fluiddruck des Vorlaufs V steht deshalb an der linken Steuerseite 152 des Steuerschiebers 40 an und übt deshalb eine Kraft auf den Steuerschieber 40 ebenfalls nach rechts aus.

In einer Ausführungsform wird die Auslenkung des Steuerschiebers 40 über die Zahnstange 126 und das Zahnritzel 124 auf die Motorwelle 120 übertragen und die Drehung der Motorwelle 120 von einem einer Motorsteuerung 208 zugeordneten Drehwinkelsensor 210 erfasst. Der Drehwinkelsensor 210 umfasst einen gehäusefesten Hall-Sensor 212 und einen an einer Motorwelle 120 des Motors 74 befestigten, drehbaren Magneten 214. Bei dieser Lösung wird durch den Lastdruck eine Drehbewegung der Motorwelle 120 bewirkt, welche mit dem Drehwinkelsensor 210 ausgewertet und an die Motorsteuerung 208 weitergegeben wird, die dann den Motor 74 entsprechend ansteuert, um den Steuerschieber 40 unter Berücksichtigung des Lastdrucks zu bewegen.

In einer weiteren Ausführungsform wird die auf den Steuerschieber 40 ausgeübte Druckkraft über die Zahnstange 126 und das Zahnritzel 124 zum Rotor des Gleichstrommotors 74 übertragen und erzeugt in den Spulen des Stators elektrische Gegenspannungen, so dass der Stromfluss durch die Spulen verändert wird, was von einer Motorsteuerung 208 des Gleichstrommotors 74 ausgewertet und zur Regelung der Lage des Steuerschiebers 40 herangezogen wird. Bei dieser Lösung wird durch den Lastdruck somit eine Kraft auf den Steuerschieber 40 ausgeübt, welche an den Gleichstrommotor 74 übertragen wird, der diese Kraft auswertet und dann den Steuerschieber 40 unter Berücksichtigung dieser Kraft bewegt.

Die Erfassung des Lastdrucks erfolgt dabei jeweils so unmittelbar, dass auftretende Schwingungen durch den Gleichstrommotor 74 und die Ansteuerung des Steuerschiebers 40 effektiv gedämpft oder gar ausgeglichen werden. Mit der erfindungsgemäßen Steuervorrichtung 12 können mehrere Drucksensoren, die den Lastdruck im Vorlauf V und im Rücklauf R erfassen, eingespart werden. Darüber hinaus ist die Lösung besonders verschleißarm, weist deshalb eine besonders lange Lebensdauer auf und ist kostengünstig, weil keine zusätzlichen Bauteile verbaut und gewartet werden müssen.

## Patentansprüche

1. Steuervorrichtung für einen schwingungsanfälligen hydraulischen Verbraucher (22) umfassend ein Ventil (24) mit einem mittels einer Betätigungseinrichtung (46) ansteuerbaren Steuerschieber (40), wobei das Ventil (24) einen Druckversorgungsanschluss (P) aufweist, an den eine Druckwaage (20) anschließbar ist, die von einer Druckversorgungseinrichtung (16) mit Druckfluid versorgbar ist, wobei die Betätigungseinrichtung (46) einen Gleichstrommotor (74) aufweist und wobei mittels einer Steuereinrichtung (66) am Steuerschieber (40) eine lastdruckabhängige Kraft erzeugbar ist, **dadurch gekennzeichnet, dass** diese Kraft am Steuerschieber (40) auf eine elektronische Motorsteuerung (208) des Gleichstrommotors (74) einwirkt, welche eine Änderung der Kraft erkennt und dieser Änderung der Kraft entgegenwirkend einer Dämpfung der Schwingungen des Verbrauchers (22) dient.

2. Steuervorrichtung nach Anspruch 1, **dadurch gekennzeichnet, dass** der Motorsteuerung (208) ein Drehwinkelsensor (210) zugeordnet ist, der bevorzugt einen gehäusefesten Hall-Sensor (212) und einen an einer Motorwelle (120) des Gleichstrommotors (74) befestigten, drehbaren Magneten (214) umfasst.

3. Steuervorrichtung nach Anspruch 1, **dadurch gekennzeichnet, dass** der Gleichstrommotor ein bürstenloser Gleichstrommotor (74) ist, der eine sensorlose Kommutierung aufweist, die eine Erfassung einer, der am Steuerschieber (40) wirkenden lastdruckabhängigen Kraft entsprechenden Rotorposition des Gleichstrommotors mittels einer in den Spulen seines Stators ausgelösten Gegenspannung ermöglicht, die von der Motorsteuerung (208) auswertbar ist.

4. Steuervorrichtung nach Anspruch 3, **dadurch gekennzeichnet, dass** der Gleichstrommotor (74) unterhalb seiner vorgebbaren Mindestdrehzahl mittels der Motorsteuerung (208), insbesondere kurze, Stromimpulse an seinen Spulen erfährt, die den Gleichstrommotor (74) im Stillstand belassen, aber dennoch das magnetische Feld seines Rotors beeinflussen, wodurch der Stromfluss durch die Spulen derart veränderbar ist, dass eine Bestimmung der Rotorposition möglich ist.

5. Steuervorrichtung nach einem der vorstehenden Ansprüche, **dadurch gekennzeichnet, dass** der Gleichstrommotor (74) den in einem Ventilgehäuse (64) des Ventils (24) längsverschiebbar geführten Steuerschieber (40) über ein Zahnradgetriebe (134) bewegt.

6. Steuervorrichtung nach einem der vorstehenden Ansprüche, **dadurch gekennzeichnet, dass** der hydraulische Verbraucher (22) ein Hydromotor (26) mit zwei gegenläufigen Drehrichtungen ist.

7. Steuervorrichtung nach einem der vorstehenden Ansprüche, **dadurch gekennzeichnet, dass** die Druckversorgungseinrichtung (16) eine LS-druckgeregelte Schwenkwinkelpumpe ist, die durch das Ventil (24) ansteuerbar ist.

8. Steuervorrichtung nach Anspruch 5, **dadurch gekennzeichnet, dass** das Ventilgehäuse (64) einen Druckversorgungsanschluss (P), mindestens zwei Nutzanschlüsse (A, B), die wechselweise einem Lastdruck oder einem Rücklaufdruck ausgesetzt sind, und einen Rücklaufanschluss (T) aufweist.

9. Steuervorrichtung nach Anspruch 8, **dadurch gekennzeichnet, dass** der Steuerschieber (40) in einer Neutral- oder Mittelstellung (44) im Ventilgehäuse (64) als Teil der Steuereinrichtung (66) zwei Signalleitungen (68, 70) absperrt, die in Verfahrstellungen (48, 30) des Steuerschiebers (40) außerhalb der Neutral-oder Mittelstellung (44) den Lastdruck auf eine Steuerseite (152; 154) und den Rücklaufdruck auf eine gegenüberliegende Steuerseite (152; 154) des Steuerschiebers (40) weiterleiten.

10. Steuervorrichtung nach Anspruch 9, **dadurch gekennzeichnet, dass** in die beiden Signalleitungen (68, 70) jeweils eine Blende (164, 168) geschaltet ist.

11. Steuervorrichtung nach Anspruch 9 oder 10, **dadurch gekennzeichnet, dass** die beiden Steuerseiten (152, 154) in Steuerräumen (108, 184) des Ventilgehäuses (64) geführt sind, die jeweils über eine Rücklaufblende (188, 190) an einen Tank (T) oder sonstigen Rücklauf angeschlossen sind.

## Claims

1. Control device for a hydraulic consumer (22) that is susceptible to vibrations comprising a valve (24) with a control spool (40) that can be controlled using an actuating device (46), the valve (24) comprising a pressure supply port (P) to which a pressure compensator (20) can be connected, said pressure compensator being able to be supplied with pressurised fluid by a pressure supply apparatus (16), the actuating device (46) comprising a DC motor (74) and a load-pressure dependent force being able to be generated at the control spool (40) by means of a control device (66), **characterised in that** this force at the control spool (40) acts on an electric motor control system (208) of the DC motor (74), which detects a change in force and serves to damp the vibrations of the consumer (22), counteracting this change in force.

2. Control device according to claim 1, **characterised in that** a rotation angle sensor (210) is assigned to the motor control system (208), said sensor preferably comprising a Hall sensor (21) fixed to the housing and a rotatable magnet (214) fixed to a motor shaft (120) of the DC motor (74).

3. Control device according to claim 1, **characterised in that** the DC motor is a brushless DC motor (74) with sensorless commutation which makes it possible to record a rotor position of the DC motor corresponding to the effective load pressuredependent force at the control spool (40) by means of a countervoltage caused in the coils of its stator, which can be evaluated by the motor control system (208).

4. Control device according to claim 3, **characterised in that**, below its pre-definable minimum speed, the DC motor (74) experiences current pulses, in particular brief current pulses, at its coils by means of the motor control system (208), said pulses leaving the DC motor (74) at a standstill, but still influencing the magnetic field of its rotor, as a result of which the current flow through the coils can be changed such that it is possible to determine the rotor position.

5. Control device according to any one of the preceding claims, **characterised in that** the DC motor (74) moves the control spool (40), which is mounted in a valve housing (64) of the valve (24) such that it can be displaced longitudinally, by means of a gearwheel mechanism (134).

6. Control device according to any one of the preceding claims, **characterised in that** the hydraulic consumer (22) is a hydraulic motor (26) with two opposite directions of rotation.

7. Control device according to any one of the preceding claims, **characterised in that** the pressure supply apparatus (16) is an LS-pressure-regulated phase shift angle pump which can be controlled by the valve (24).

8. Control device according to claim 5, **characterised in that** the valve housing (64) comprises a pressure supply port (P), at least two service ports (A, B), which are exposed alternately to a load pressure or a return pressure, and a return port (T).

9. Control device according to claim 8, **characterised in that** the control spool (40) blocks two signal lines (68, 70) in a neutral or middle position (44) in the valve housing (64) as part of the control device (66), said lines, in displacement positions (48, 30) of the control spool (40) outside the neutral or middle position (44), relaying the load pressure to a control side (152; 154) and relaying the return pressure to an opposite control side (152; 154) of the control spool (40).

10. Control device according to claim 9, **characterised in that** a diaphragm (164, 168) is in each case connected to the two signal lines (68, 70).

11. Control device according to either claim 9 or claim 10, **characterised in that** the two control sides (152, 154) are guided in control chambers (108, 184) of the valve housing (64), said chambers each being connected to a tank (T) or other return by means of a return diaphragm (188, 190).

## Revendications

1. Installation de commande d'un consommateur (22) hydraulique sujet à vibrations, comprenant une soupape (24) ayant un tiroir (40) de commande pouvant être commandée au moyen d'un dispositif (46) d'actionnement, dans laquelle la soupape (24) a un raccord (P) d'alimentation en pression, auquel peut être raccordée une balance (20) manométrique, qui peut être alimentée en fluide sous pression par un dispositif (16) d'alimentation en pression, dans laquelle le dispositif (46) d'actionnement a un moteur (74) à courant continu et dans laquelle, au moyen d'un dispositif (66) de commande, une force, qui dépend de la pression de charge, peut être produite au tiroir (40) de commande, **caractérisée en ce que** cette force au tiroir (40) de commande s'applique à une commande (208) électronique du moteur (74) à courant continu, laquelle détecte une variation de la force et, en s'opposant à cette variation de la force, sert à amortir les vibrations du consommateur (22).

2. Installation de commande suivant la revendication 1, **caractérisée en ce qu'**à la commande (208) du moteur est associé un capteur (210) d'angle de rotation, qui comprend de préférence un capteur (212) de Hall fixé à la carcasse et un aimant (214) tournant fixé à un arbre (120) du moteur (74) à courant continu.

3. Installation de commande suivant la revendication 1, **caractérisée en ce que** le moteur à courant continu est un moteur (74) à courant continu sans balais, qui a une commutation sans capteur permettant, au moyen d'une tension opposée déclenchée dans les bobines de son stator, un relevé d'une position, correspondant à la force en fonction de la pression de charge s'appliquant au tiroir (40) de commande, du rotor du moteur à courant continu, tension opposée qui peut être exploitée par la commande (208) du moteur.

4. Installation de commande suivant la revendication 3, **caractérisée en ce que** le moteur (74) à courant continu subit, en-dessous de sa vitesse de rotation, la plus petite pouvant être donnée à l'avance, au moyen de la commande (208) du moteur, des impulsions de courant, notamment brèves, sur ses bobines, qui laissent le moteur (74) à courant continu à l'arrêt, mais influencent toutefois le champs magnétique de son rotor, grâce à quoi le flux de courant dans les bobines peut être modifié, de manière à rendre possible une détermination de la position du rotor.

5. Installation de commande suivant l'une des revendications précédentes, **caractérisé en ce que** le moteur (74) à courant continu déplace, par l'intermédiaire d'une transmission (134) par engrenage, le tiroir (40) de commande guidé à coulissement longitudinal dans un corps (64) de la soupape (24) .

6. Installation de commande suivant l'une des revendications précédentes, **caractérisée en ce que** le consommateur (22) hydraulique est un moteur (26) hydraulique à deux sens de rotation contraires.

7. Installation de commande suivant l'une des revendications précédentes, **caractérisée en ce que** le dispositif (16) d'alimentation en pression est une pompe à angle de pivotement, qui est réglée en pression LS et qui peut être commandée par la soupape (24).

8. Installation de commande suivant la revendication 5, **caractérisée en ce que** le corps (64) de la soupape a un raccord (P) d'alimentation en pression, au moins deux raccords (A, B) utiles, qui sont soumis en alternance à une pression de charge ou à une pression de retour, et un raccord (T) de retour.

9. Installation de commande suivant la revendication 8, **caractérisée en ce que** le tiroir (40) de commande interrompt, dans une position (44) neutre ou médiane, dans le corps (64) de la soupape, comme partie du dispositif (66) de commande, deux lignes (68, 70) de signalisation, qui, dans des positions (48, 30) de déplacement du tiroir (40) de commande en dehors de la position (44) neutre ou médiane, acheminent la pression de charge à un côté (152 ; 154) de commande et la pression de retour à un côté (152 ; 154) de commande opposé du tiroir (40) de commande.

10. Installation de commande suivant la revendication 9, **caractérisée en ce que** respectivement un diaphragme (164, 168) est monté dans les deux lignes (68, 70) de signalisation.

11. Installation de commande suivant la revendication 9 ou 10, **caractérisée en ce que** les deux côtés (152, 154) de commande sont guidés dans des espaces (108, 184) de commande du corps (64) de la soupape, qui sont raccordés respectivement par un diaphragme (188, 190) de retour à un réservoir (T) ou à un retour autre.
